(19) Europäisches Patentamt
European Patent Office
Office européen des brevets

(11) **EP 3 159 701 B1**

(12) **FASCICULE DE BREVET EUROPEEN**

(45) Date de publication et mention
de la délivrance du brevet:
**27.02.2019 Bulletin 2019/09**

(51) Int Cl.:
***G01P 7/00*** *(2006.01)*     ***B61L 25/02*** *(2006.01)*
***G01C 21/16*** *(2006.01)*     ***G01P 15/00*** *(2006.01)*

(21) Numéro de dépôt: **16194734.6**

(22) Date de dépôt: **20.10.2016**

(54) **PROCÉDÉ DE CALCUL DE L'ACCÉLÉRATION PROPRE D'UN VÉHICULE FERROVIAIRE, PRODUIT PROGRAMME D'ORDINATEUR ET SYSTÈME ASSOCIÉS**

VERFAHREN ZUR BERECHNUNG DER EIGENBESCHLEUNIGUNG EINES SCHIENENFAHRZEUGS, ENTSPRECHENDES COMPUTERPROGRAMMPRODUKT UND ENTSPRECHENDES SYSTEM

METHOD FOR DETERMINING THE PROPER ACCELERATION OF A RAILROAD VEHICLE, ASSOCIATED COMPUTER PROGRAM AND SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.10.2015 FR 1560159**

(43) Date de publication de la demande:
**26.04.2017 Bulletin 2017/17**

(73) Titulaire: **Meggitt (Sensorex)**
**74166 Archamps (FR)**

(72) Inventeur: **VEILLARD, Damien**
**74166 (FR)**

(74) Mandataire: **Lavoix**
**2, place d'Estienne d'Orves**
**75441 Paris Cedex 09 (FR)**

(56) Documents cités:
DE-A1-102012 219 109    US-A1- 2005 065 726
US-A1- 2009 326 851     US-B1- 6 459 990

## Description

La présente invention concerne un procédé de calcul de l'accélération propre d'un véhicule ferroviaire lors du déplacement de celui-ci le long d'une voie ferrée.

Par définition l'accélération propre est l'accélération due au mouvement du véhicule et est donc indépendant de la gravité. L'accélération propre se décompose (dans un repère de Frenet) en une accélération tangentielle, donc colinéaire au sens du mouvement du véhicule ferroviaire, et en une accélération normale ou centripète, donc perpendiculaire au sens du mouvement du véhicule ferroviaire.

L'accélération propre permet notamment de déterminer la vitesse instantanée et la position exacte du véhicule ferroviaire sur la voie ferrée par la composante tangentielle, indépendamment de la pente.

Différentes méthodes de détermination de la position d'un véhicule ferroviaire sur une voie ferrée existent dans l'état de la technique.

Certaines de ces méthodes permettent de déterminer la position du véhicule ferroviaire à partir d'informations acquises par des balises réparties le long de la voie ferrée.

Ceci est particulièrement le cas d'un système de signalisation, de contrôle et de protection des trains du type ETCS (de l'anglais « European Train Control System »).

Ce système a pour but de normaliser les systèmes de signalisation présents actuellement dans différents pays européens.

Un système du type ETCS comprend notamment des balises permettant de collecter en temps réel et de transmettre vers un centre de traitement, l'ensemble des informations relatives à la position précise du train, à sa vitesse, etc.

Sur la base de ces informations, le centre de traitement donne des commandes appropriées à la signalisation correspondante.

Toutefois, il existe des risques d'une défaillance technique d'un tel système de signalisation.

Ceci conduit alors à la nécessité d'avoir des systèmes de localisation embarqués au bord du véhicule ferroviaire permettant notamment d'avoir une information redondante en ce qui concerne la vitesse instantanée et la position exacte du véhicule.

Plusieurs systèmes de localisation embarqués sont connus dans l'état de la technique.

Parmi eux, on peut notamment citer des récepteurs de signal GPS, des tachymètres ou encore différents types de radars.

Cependant, le fonctionnement de tels systèmes de localisation peut être perturbé par des évènements extérieurs, tels que par exemple certains évènements météorologiques (brouillard, neige, pluie) ou encore la présence d'obstacles environnants comme par exemple les tunnels.

En outre, il est connu que les systèmes de localisation basés sur les mesures d'un tachymètre ne fournissent pas de localisation exacte lorsque les conditions d'adhérence entre les roues et les rails sont dégradées. Ceci est particulièrement dû au glissement des roues lors des phases de freinage du véhicule ferroviaire.

En effet, lors de ces phases, les roues peuvent glisser sur la voie ferrée.

Un autre type de systèmes de localisation embarqués permet de déterminer la position du véhicule ferroviaire correspondant à partir notamment de mesures inertielles issues d'une centrale inertielle d'acquisition de données embarquée.

Une telle centrale inertielle comporte généralement au moins un accéléromètre et un gyromètre et est décrit par exemple dans US 2009/326851 A1.

En particulier, l'accéléromètre permet de mesurer les accélérations réelles du véhicule ferroviaire selon l'axe de son déplacement pour en déduire ensuite la position de ce véhicule.

Ces mesures peuvent être complétées par des mesures de la vitesse angulaire du véhicule ferroviaire fournies par le gyromètre apte à mesurer des accélérations angulaires autour au moins d'un axe.

Toutefois, la position exacte du véhicule ferroviaire ne peut pas être obtenue directement à partir des mesures de son accélération réelle.

En effet, la position exacte doit être déterminée à partir de l'accélération propre de ce véhicule, c'est-à-dire de l'accélération due au déplacement de ce véhicule le long de la voie ferrée sans prise en compte de l'accélération due par exemple à la topologie de la voie.

Autrement dit, il est nécessaire de soustraire, des mesures prises par l'accéléromètre, l'accélération due à la topologie de la voie.

Ainsi, pour obtenir l'accélération propre, les systèmes de localisation existants utilisent généralement des données supplémentaires.

Ces données sont par exemple relatives à la topologie de la voie ou comprennent des mesures autres que les mesures inertielles telles que par exemple la vitesse issue d'un tachymètre ou la position issue d'un récepteur GPS.

On conçoit alors que ces données supplémentaires ne sont pas toujours disponibles et peuvent être considérablement erronées.

En outre, la nécessité de la prise en compte de telles données conduit à des systèmes de localisation à structure complexe.

Par ailleurs, le document précité US 2009/326851 A1 décrit un dispositif de mesure inertielle permettant notamment de déterminer la position d'un engin mobile lorsque des données complémentaires telles que données GPS ne sont pas disponibles. Toutefois, ce dispositif présente une structure et un fonctionnement relativement complexes.

En outre, le document DE 10 2012 219109 A1 décrit un procédé de calcul de la vitesse d'un véhicule ferroviaire comportant notamment une centrale inertielle d'acquisition de données.

La présente invention a pour but de proposer un procédé de calcul de l'accélération propre d'un véhicule ferroviaire permettant de déterminer l'accélération propre et notamment l'accélération tangentielle de ce véhicule de manière particulièrement précise et ceci uniquement à partir des mesures inertielles, c'est-à-dire, à partir des mesures fournies par un accéléromètre et un gyromètre.

À cet effet, l'invention a pour objet un procédé de calcul conforme à la revendication 1.

Suivant d'autres aspects avantageux de l'invention, le procédé comprend une ou plusieurs des caractéristiques des revendications 2 à 9, prise(s) isolément ou suivant toutes les combinaisons techniquement possibles.

L'invention a également pour objet un produit programme d'ordinateur comportant des instructions logicielles qui, lorsque mises en oeuvre par un équipement informatique, mettent en oeuvre un procédé tel que défini ci-dessus.

L'invention a également pour objet un système calcul conforme à la revendication 11.

Ces caractéristiques et avantages de l'invention apparaitront à la lecture de la description qui va suivre, donnée uniquement à titre d'exemple non limitatif, et faite en référence aux dessins annexés, sur lesquels :

- la figure 1 est une vue schématique d'un véhicule ferroviaire se déplaçant le long d'une voie ferrée et comportant un système de calcul de l'accélération propre selon l'invention ;
- la figure 2 est une vue schématique détaillée du système de calcul de la figure 1 ; et
- la figure 3 est un organigramme d'un procédé de calcul selon l'invention.

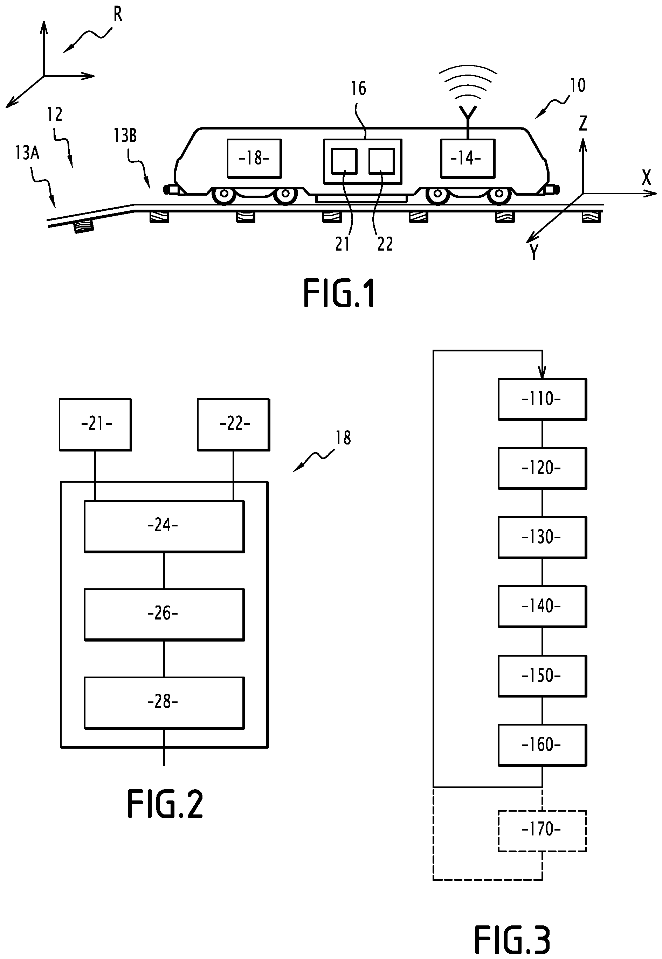

On a en effet illustré sur la figure 1, un véhicule ferroviaire 10 se déplaçant le long d'une voie ferrée 12 et comportant des moyens de communication 14 connus en soi, une centrale inertielle d'acquisition de données 16 et un système de calcul 18 selon l'invention.

Le véhicule ferroviaire 10 est par exemple un train comportant notamment une locomotive pilotée par un conducteur.

Dans l'exemple illustré sur la figure 1, un repère mobile XYZ est associé au véhicule ferroviaire 10.

Le repère mobile XYZ est formé d'un axe de déplacement X suivant la voie ferrée 12, d'un axe transversal Y perpendiculaire à cette voie dans un plan horizontal, et d'un axe vertical Z perpendiculaire à l'axe transversal Y et à l'axe de déplacement X.

Le repère mobile XYZ est mobile par rapport à un repère fixe R.

Le repère fixe R est par exemple un repère du type NED (de l'anglais « North East Down ») présentant trois axes orthogonaux dont un axe coïncide avec la direction nord, un axe coïncide avec la direction Est et un axe coïncide avec la direction verticale.

La voie ferrée 12 est composée d'une pluralité de portions 13A, 13B comprenant chacune par exemple deux rails parallèles et un système de signalisation du type ETCS (de l'anglais « European Train Control System »).

Le système de signalisation est notamment apte à communiquer avec les moyens de communication 14 du véhicule ferroviaire 10, pour, par exemple, déterminer sa position exacte, sa vitesse ou bien d'autres paramètres relatifs au véhicule 10.

Les portions 13A, 13B de la voie ferrée 12 présentent par exemple des topologies différentes.

Ainsi, selon l'exemple de réalisation de la figure 1, les rails de la portion 13B sont disposés dans un plan horizontal du repère fixe R et les rails de la portion 13A sont légèrement inclinés par rapport à ce plan.

Ainsi, lors du déplacement le long de la voie ferrée 12, le véhicule ferroviaire 10 subit des accélérations réelles composées des accélérations dues à la topologie de la voie (pentes, dévers etc.) avec notamment la force gravitationnelle et des accélérations propres liées au déplacement du véhicule ferroviaire 10 le long de la voie 12.

En particulier, les accélérations propres du véhicule ferroviaire 10 ne dépendent pas de la topologie de la voie 12, et notamment de la force gravitationnelle.

La centrale inertielle 16 comprend un accéléromètre 21 permettant de fournir des premières mesures relatives à l'accélération réelle du véhicule ferroviaire 10 et un gyromètre 22 permettant de fournir des deuxièmes mesures relatives à la vitesse angulaire du véhicule ferroviaire 10.

En particulier, les premières mesures comprennent des mesures $ax, ay$ et $az$ correspondant aux accélérations réelles du véhicule ferroviaire 10 respectivement selon les axes X, Y et Z.

Ainsi, les accélérations réelles présentent la somme des forces accélérométriques projetées sur les axes sensibles X, Y et Z de l'accéléromètre.

Les deuxièmes mesures comprennent des mesures $gx, gy$ et gz correspondant aux vitesses angulaires du véhicule ferroviaire 10 respectivement selon les axes X, Y et Z.

Le système de calcul 18 permet d'estimer notamment les accélérations propres du véhicule ferroviaire 10 à chaque instant selon un procédé de calcul de l'accélération propre décrit plus en détail par la suite.

Le système de calcul 18 permet ainsi de déterminer la position exacte du véhicule ferroviaire 10 indépendamment du système de signalisation.

Le système de calcul 18 est illustré plus en détail sur la figure 2.

Ainsi, en référence à cette figure 2, le système de calcul 18 comporte un module d'entrée 24, un module de traitement 26 et un module de sortie 28.

Le module d'entrée 24 est raccordé à l'accéléromètre 21 et au gyromètre 22, et est apte à recevoir à chaque instant des mesures issues de ces dispositifs.

Le module de traitement 26 est apte à traiter les mesures reçues pour estimer notamment l'accélération propre du véhicule ferroviaire 10.

Le module de traitement 26 est par exemple réalisé sous la forme d'un logiciel qui est mis en oeuvre par un calculateur embarqué.

Le module de sortie 28 est apte à transmettre les estimations produites par le module de traitement 26 par exemple au conducteur et/ou à un système de contrôle embarqué ou distant du véhicule ferroviaire 10.

Le procédé de calcul de l'accélération propre selon l'invention va désormais être expliqué en référence à la figure 3 illustrant un ordinogramme de ses étapes.

Initialement, le véhicule ferroviaire 10 circule le long de la voie ferrée 12.

À chaque instant *t,* l'accéléromètre 21 et le gyromètre 22 prennent des mesures correspondantes.

Le procédé de calcul est itéré par le système de calcul 20 pour chaque instant *t.*

Lors d'une étape initiale 110, le module d'entrée 24 acquiert des mesures prises par l'accéléromètre 21 et le gyromètre 22 à l'instant *t.*

En particulier, ces mesures comprennent des mesures *ax, ay* et *az* des accélérations du véhicule ferroviaire 10 selon respectivement les axes X, Y et Z, et des mesures *gx,gy* et *gz* des vitesses angulaires du véhicule ferroviaire 10 selon respectivement les axes X, Y et Z.

Par ailleurs, les mesures de l'accélération *az* du véhicule ferroviaire 10 selon l'axe verticale Z sont acquises sous la forme de *N* échantillons $az_0$, ..., $az_{N-1}$ dans une fenêtre temporelle prédéterminée, le paramètre *N* étant un nombre pair naturel.

Puis, le module d'entrée 24 transmet ces mesures au module de traitement 26.

Lors d'une étape suivante 120, le module de traitement 26 estime la vitesse de déplacement du véhicule ferroviaire 10 en utilisant une analyse spectrale des échantillons de l'accélération *az* du véhicule ferroviaire 10 selon l'axe verticale Z.

En variante, le module de traitement 26 estime la vitesse de déplacement du véhicule ferroviaire 10 en utilisant une analyse spectrale des échantillons de l'accélération du véhicule ferroviaire 10 selon l'axe X ou l'axe Y.

Pour ce faire, le module de traitement 26 calcule d'abord une transformation de Fourier rapide des échantillons $az_0,...,az_{N-1}$ pour obtenir une densité spectrale de puissance $FFT_k(t)$ qui est déterminée par l'expression suivante :

$$FFT_k(t) = \sum_{n=0}^{N-1} az_n e^{\frac{i2\pi kn}{N}}.$$

Puis, le module de traitement 26 calcule la puissance du spectre $P_{FFT}(t)$ en utilisant l'expression suivante :

$$P_{FFT}(t) = \sum_{k=2}^{N/2} |FFT_k(t)|.$$

Finalement, la vitesse estimée $v_{FFT}(t)$ du véhicule 10 est déterminée en normalisant la puissance du spectre $P_{FFT}(t)$ selon l'expression suivante :

$$v_{FFT}(t) = \rho\sqrt{P_{FFT}(t)} + \beta,$$

où *p* est un facteur d'échelle et *β* est un biais. La valeur $\rho$ est connue a *priori* et est déterminée par exemple par le constructeur du gyromètre 21. La valeur *β* s'équilibre par exemple à chaque démarrage du système de calcul 18.

Lors d'une étape 130 suivante, le module de traitement 26 estime les attitudes de roulis $\phi_{acc}$ et de tangage $\phi_{acc}$ du véhicule ferroviaire 10 à partir des premières mesures.

En particulier, le module de traitement utilise les formules suivantes pour déterminer ces valeurs :

$$\phi_{acc} = \text{atan}\left(\frac{ay}{\sqrt{ax^2 + az^2}}\right),$$

$$\theta_{acc} = \text{atan}\left(\frac{ax}{\sqrt{ay^2 + az^2}}\right) + \xi_{\Delta v},$$

où $\xi_{\Delta v}$ est une correction d'angle qui dépend de la différence entre l'estimation de la vitesse $v_{FFT}(t)$ déterminée lors de l'étape 120 et l'intégration de l'accélération tangentielle autrement dit de l'accélération propre selon l'axe X du véhicule ferroviaire 10 lors de la précédente itération du procédé.

Lors d'une étape 140, le module de traitement 28 définit un vecteur de mesures $y_t$ et un vecteur d'état $x_t$ à l'instant *t* selon les expressions suivantes :

$$y_t = \begin{vmatrix} ax \\ ay \\ az \\ gx \\ gy \\ gz \\ \phi_{acc} \\ \theta_{acc} \\ v_{FFT} \end{vmatrix}, \quad x_t = \begin{vmatrix} \dot{\phi} \\ \dot{\theta} \\ \dot{\psi} \\ \phi \\ \theta \\ \psi \\ p \\ q \\ r \\ v \\ \beta_{gx} \\ \beta_{gy} \end{vmatrix},$$

où :

$\phi$, $\theta$ et $\psi$ sont les angles d'Euler définissant l'attitude et l'orientation du véhicule ferroviaire. Les angles d'Euler permettent également le passage entre le repère mobile XYZ et le repère fixe R ;

$\dot{\phi}$, $\dot{\theta}$ et $\dot{\psi}$ sont les dérivées des angles d'Euler ;

$p, q$ et $r$ sont les accélérations propres du véhicule ferroviaire 10 projetées sur les trois axes du repère fixe R ;

$v$ est la vitesse curviligne du véhicule ferroviaire 10 ; et

$\beta_{gx}$ et $\beta_{gy}$ sont les biais du gyromètre 22 selon respectivement les axes X et Y.

Ainsi, le vecteur de mesures $y_t$ est composé des premières mesures, des deuxièmes mesures, de la vitesse estimée $v_{FFT}(t)$ de déplacement du véhicule ferroviaire 10 et des attitudes de roulis $\phi_{acc}$ et de tangage $\theta_{acc}$ du véhicule ferroviaire 10 estimées.

Le vecteur d'état $x_t$ est composé notamment des accélérations propres $p$, $q$ et $r$ du véhicule ferroviaire 10 projetées sur les trois axes du repère fixe R. Par ailleurs, dans le repère mobile, l'accélération propre selon l'axe X est l'accélération tangentielle du véhicule ferroviaire 10, et l'accélération propre selon l'axe Y est l'accélération centripète du véhicule ferroviaire 10.

Lors d'une étape 150 suivante, le module de traitement 26 applique un estimateur d'état tel que par exemple un filtre de Kalman, pour estimer le vecteur d'état $x_t$ en utilisant le vecteur de mesures $y_t$.

Bien entendu d'autres estimateurs peuvent être envisagés.

En particulier, lors de cette étape 150, une estimation $\hat{x}_{t|t}$ du vecteur d'état $x_t$ est obtenue à partir du vecteur de mesures $y_t$ et d'une estimation $\hat{x}_{t-1|t-1}$ d'un vecteur d'état $x_{t-1}$ déterminée lors de la précédente itération du procédé.

Pour ce faire, l'étape 150 comporte une phase de prédiction consistant à obtenir un vecteur d'état prédit $\hat{x}_{t|t-1}$ à partir notamment de l'estimation $\hat{x}_{t-1|t-1}$, et une phase d'observation consistant à obtenir l'estimation $\hat{x}_{t|t}$ à partir du vecteur d'état prédit $\hat{x}_{t|t-1}$ et le vecteur de mesures $y_t$.

Lors de la phase de prédiction, le vecteur d'état prédit $\hat{x}_{t|t-1}$ est obtenu comme suit :

$$\hat{x}_{t|t-1} = F_{t-1}\hat{x}_{t-1|t-1},$$

$$P_{t|t-1} = F_{t-1}P_{t-1|t-1}F_t^T + Q_{t-1},$$

où

$F_{t-1}$ est une matrice de transition entre les instants $t$ - 1 et $t$ ;

$P_{t|t-1}$ est une matrice a priori de la covariance de l'erreur déterminée notamment à partir d'une matrice précédente $P_{t-1|t-1}$ déterminée lors de la phase d'observation de la précédente itération du procédé selon la formule explicitée ci-après ; et

$Q_{t-1}$ est une matrice de covariance du bruit de processus.

Lors de la phase d'observation, l'estimation $\hat{x}_{t|t}$ du vecteur d'état $x_t$ est obtenue comme suit :

$$K_t = P_{t|t-1}H_t^T\big(H_t P_{t|t-1}H_t^T + R_t\big)^{-1},$$

$$\hat{x}_{t|t} = \hat{x}_{t|t-1} + K_t\big(y_t - H_t\hat{x}_{t|t-1}\big),$$

$$P_{t|t} = P_{t|t-1} - K_t H_t P_{t|t-1},$$

où

$K_t$ est le gain de Kalman ;

$R_t$ est une matrice de covariance du bruit de mesure ;

$H_t$ est une matrice reliant le vecteur de mesures $y_t$ et le vecteur d'état $x_t$ ; et

$P_{t|t}$ est une matrice a posteriori de la covariance de l'erreur calculée pour la prochaine itération du procédé.

Lors d'une étape 160 suivante, le vecteur d'estimation $\hat{x}_{t|t}$ du vecteur d'état $x_t$ est transmis au module de sortie 28 qui en extrait notamment les estimations des accélérations propres $p$, $q$ et $r$ projetés sur les axes du repère fixe R.

Ces accélérations sont ensuite utilisées pour déterminer par exemple la position exacte du véhicule ferroviaire 10. En particulier, ces accélérations sont ensuite projetées dans le repère mobile XYZ afin d'extraire l'accélération tangentielle (suivant l'axe X) qui servira au calcul de la position.

Puis, les étapes 110 à 160 décrites sont répétées de manière itérative.

Lorsque le véhicule ferroviaire 10 est à l'arrêt, le module de traitement 26 met en oeuvre une étape 170 d'auto-calibration.

En particulier, lors de cette étape 170, le module de traitement 26 corrige les éventuelles erreurs cumulées dans le temps tel qu'un mauvais suivi des biais du gyromètre 22.

Le module de traitement 26 corrige donc les estimations sur les biais $\beta_{gx}$ et $\beta_{gy}$ du gyromètre 22.

Lors de la même étape 170, le module de traitement 26 corrige en outre les estimations des attitudes de roulis $\phi_{acc}$ et de tangage $\theta_{acc}$.

Il est à noter que l'étape 170 d'auto-calibration est possible grâce au réglage en temps réel de la matrice $Q_t$ de covariance du bruit de processus et de la matrice $R_t$ de covariance du bruit de mesure.

On conçoit alors que la présente invention présente un certain nombre d'avantages.

En particulier, l'invention permet d'obtenir des estimations de l'accélération propre d'un véhicule ferroviaire et notamment l'accélération tangentielle uniquement à partir des mesures de l'accéléromètre et du gyromètre.

Ces estimations sont particulièrement précises grâce notamment à l'étape 120 d'estimation de la vitesse de déplacement du véhicule ferroviaire.

Ceci permet alors d'éviter l'utilisation des dispositifs de mesures supplémentaires tels qu'un tachymètre ou un récepteur du signal GPS.

Finalement, les estimations d'attitude de roulis $\hat{\phi}_{acc}$ et de tangage $\theta_{acc}$ extraites du vecteur d'état estimé $\hat{x}_{t|t}$ permettent un suivi en temps réel de l'attitude du véhicule ferroviaire et permettent d'éviter l'utilisation des données relatives à la topologie de la voie et de récupérer ainsi de l'espace de stockage dans les calculateurs embarqués.

Bien entendu, d'autres modes de réalisation de l'invention sont également possibles.

## Revendications

1. Procédé de calcul de l'accélération propre d'un véhicule ferroviaire (10) lors du déplacement de celui-ci le long d'une voie ferrée (12), le véhicule ferroviaire (10) comportant une centrale inertielle d'acquisition de données (16) comprenant un accéléromètre (21) permettant de fournir des premières mesures correspondant aux accélérations réelles du véhicule ferroviaire (10) selon trois axes orthogonaux (X, Y, Z), et un gyromètre (22) permettant de fournir des deuxièmes mesures correspondant aux vitesses angulaires du véhicule ferroviaire (10) selon trois axes orthogonaux (X, Y, Z) ;

    le procédé étant **caractérisé en ce qu'**il comporte les étapes suivantes :

    - estimer (120) la vitesse de déplacement du véhicule ferroviaire (10) en utilisant une analyse spectrale des premières mesures ;
    - estimer (130) les attitudes de roulis ($\phi_{acc}$) et de tangage ($\theta_{cc}$) du véhicule ferroviaire (10) à partir des premières mesures ;
    - définir (140) un vecteur de mesures ($y_t$) composé des premières mesures, des deuxièmes mesures, de la vitesse de déplacement du véhicule ferroviaire estimée et des attitudes de roulis ($\phi_{acc}$) et de tangage ($\theta_{acc}$) du véhicule ferroviaire (10) estimées ;
    - définir (140) un vecteur d'état ($x_t$) comportant au moins une composante ($p$, $q$, $r$) correspondant à l'accélération propre du véhicule ferroviaire selon au moins un axe (X, Y, Z) ;
    - appliquer (150) un estimateur d'état pour estimer le vecteur d'état ($x_t$) en utilisant le vecteur de mesures ($y_t$) ;
    - extraire (160) l'accélération propre du véhicule ferroviaire (10) de ce vecteur d'état.

2. Procédé selon la revendication 1, **caractérisé en ce que** l'estimation de la vitesse de déplacement du véhicule ferroviaire (10) est effectuée en utilisant une analyse spectrale des premières mesures correspondant aux accélérations réelles du véhicule ferroviaire (10) selon un axe vertical (Z).

3. Procédé selon la revendication 2, **caractérisé en ce que** l'estimation de la vitesse de déplacement du véhicule ferroviaire (10) comprend le calcul d'une transformation de Fourier rapide desdites premières mesures.

4. Procédé selon l'une quelconque des revendications précédentes, **caractérisé en ce que** lors de chaque itération suivante du procédé, l'estimation des attitudes de roulis ($\phi_{acc}$) et de tangage ($\theta_{acc}$) du véhicule ferroviaire (10) comprend le calcul d'une correction d'angle ($\xi_{\Delta v}$) d'estimation dépendant de la différence entre la vitesse estimée de déplacement du véhicule ferroviaire (10) et l'intégration de l'estimation de l'accélération propre du véhicule ferroviaire (10) calculée lors d'une précédente itération du procédé.

5. Procédé selon l'une quelconque des revendications précédentes, **caractérisé en ce que** le vecteur d'état ($x_t$) comporte les composantes correspondant à :

    - trois accélérations propres ($p,q,r$) du véhicule ferroviaire (10) selon trois axes orthogonaux dans un repère fixe (R) ;
    - les angles d'Euler ($\phi$, $\theta$, $\psi$) représentant l'attitude et l'orientation du train ;
    - les vitesses angulaires ($\dot{\phi}, \dot{\theta}, \dot{\psi}$) étant les dérivées des angles d'Euler ;
    - des biais ($\beta_{gx}, \beta_{gy}$) du gyromètre (22) selon au moins deux axes ; et

- une vitesse curviligne (*v*) du véhicule ferroviaire (10).

**6.** Procédé selon l'une quelconque des revendications précédentes, **caractérisé en ce que** lors de chaque itération suivante du procédé, l'application de l'estimateur d'état comprend le calcul d'une estimation suivante ($\hat{x}_{t|t}$) d'un vecteur d'état suivant (*x_t*) à partir d'un vecteur de mesures suivant (*y_t*) et d'une estimation précédente ($\hat{x}_{t-1|t-1}$) d'un vecteur d'état précédent (*x_{t-1}*) déterminée lors d'une précédente itération du procédé.

**7.** Procédé selon l'une quelconque des revendications précédentes, **caractérisé en ce qu'**il comprend en outre une étape (170) d'auto-calibration effectuée lorsque le véhicule ferroviaire (10) est à l'arrêt.

**8.** Procédé selon la revendication 7, **caractérisé en ce que** l'étape d'auto-calibration (170) comprend la correction des estimations sur des biais ($\beta_{gx}$, $\beta_{gy}$) du gyromètre (22) et la correction sur les estimations des attitudes de roulis ($\phi_{acc}$) et tangage ($\theta_{acc}$).

**9.** Procédé selon l'une quelconque des revendications précédentes, caractérisé en ce l'estimateur d'état est un filtre de Kalman.

**10.** Produit programme d'ordinateur comportant des instructions logicielles qui, lorsque mises en oeuvre par un équipement informatique, mettent en oeuvre un procédé selon l'une quelconque des revendications précédentes.

**11.** Système (20) de calcul de l'accélération propre d'un véhicule ferroviaire (10) lors du déplacement de celui-ci le long d'une voie ferrée (12), le véhicule ferroviaire (10) comportant une centrale inertielle d'acquisition de données (16) comprenant un accéléromètre (21) permettant de fournir des premières mesures correspondant aux accélérations réelles du véhicule ferroviaire (10) selon trois axes orthogonaux (X, Y, Z), et un gyromètre (22) permettant de fournir des deuxièmes mesures correspondant aux vitesses angulaires du véhicule ferroviaire (10) selon trois axes orthogonaux (X, Y, Z) ; le système étant **caractérisé en ce qu'**il est apte à :

- estimer (120) la vitesse de déplacement du véhicule ferroviaire (10) en utilisant une analyse spectrale des premières mesures ;
- estimer (130) les attitudes de roulis ($\phi_{acc}$) et de tangage ($\theta_{acc}$) du véhicule ferroviaire (10) à partir des premières mesures ;
- définir (140) un vecteur de mesures (*y_t*) composé des premières mesures, des deuxièmes mesures, de la vitesse de déplacement du véhicule ferroviaire estimée et des attitudes de roulis ($\phi_{acc}$) et de tangage ($\theta_{acc}$) du véhicule ferroviaire (10) estimées ;
- définir (140) un vecteur d'état (*x_t*) comportant au moins une composante (*p, q, r*) correspondant à l'accélération propre du véhicule ferroviaire selon au moins un axe (X, Y, Z) ;
- appliquer (150) un estimateur d'état pour estimer le vecteur d'état (*x_t*) en utilisant le vecteur de mesures (*y_t*) ;
- extraire (160) l'accélération propre du véhicule ferroviaire (10) de ce vecteur d'état.

**Patentansprüche**

**1.** Verfahren zum Berechnen der Eigenbeschleunigung eines Schienenfahrzeugs (10) bei seiner Bewegung entlang einer Schiene (12), wobei das Schienenfahrzeug (10) eine träge Zentrale zur Beschaffung von Daten (16) aufweist, aufweisend einen Beschleunigungsmesser (21), der es ermöglicht, erste Messungen, die den tatsächlichen Beschleunigungen des Schienenfahrzeugs (10) gemäß drei orthogonalen Achsen (X, Y, Z) entsprechen, zu liefern und ein Gyrometer (22), das es ermöglicht, zweite Messungen, die den Winkelgeschwindigkeiten des Schienenfahrzeugs (10) gemäß drei orthogonalen Achsen (X, Y, Z) entsprechen, zu liefern;
wobei das Verfahren dadurch charakterisiert ist, dass es die folgenden Schritte aufweist:

- Schätzen (120) der Bewegungsgeschwindigkeit des Schienenfahrzeugs (10) unter Verwendung einer Spektralanalyse der ersten Messungen;
- Schätzen (130) des Roll-Verhaltens ($\phi_{acc}$) und des Nick-Verhaltens ($\theta_{acc}$) des Schienenfahrzeugs (10) ausgehend von den ersten Messungen;
- Definieren (140) eines Vektors von Messungen (*y_t*), zusammengesetzt aus den ersten Messungen, den zweiten Messungen, der geschätzten Bewegungsgeschwindigkeit des Schienenfahrzeugs und des geschätzten Roll-Verhaltens ($\phi_{acc}$) und des geschätzten Nick-Verhaltens ($\theta_{acc}$) des Schienenfahrzeugs (10);
- Definieren (140) eines Zustandsvektors (*x_t*), der mindestens eine Komponente (p, q, r) aufweist, die der Eigengeschwindigkeit des Schienenfahrzeugs gemäß mindestens einer Achse (X, Y, Z) entspricht;
- Anwenden (150) eines Zustandsschätzers zum Schätzen des Zustandsvektors (*x_t*) unter Verwendung des Vektors von Messungen (*y_t*);
- Extrahieren (160) der Eigenbeschleunigung des Schienenfahrzeugs (10) aus diesem Zustandsvektor.

**2.** Verfahren gemäß Anspruch 1, dadurch charakterisiert, dass die Schätzung der Bewegungsgeschwindigkeit des Schienenfahrzeugs (10) unter Verwendung einer Spektralanalyse der ersten Messungen, die den tatsächlichen Beschleunigungen des Schienenfahrzeugs (10) gemäß einer vertikalen Achse (Z) entsprechen, durchgeführt wird.

**3.** Verfahren gemäß Anspruch 2, dadurch charakterisiert, dass die Schätzung der Bewegungsgeschwindigkeit des Schienenfahrzeugs (10) die Berechnung einer schnellen Fourier-Transformation der ersten Messungen aufweist.

**4.** Verfahren gemäß einem der vorhergehenden Ansprüche, dadurch charakterisiert, dass bei jeder folgenden Iteration des Verfahrens die Schätzung des Roll-Verhaltens ($\phi_{acc}$) und des Nick-Verhaltens ($\theta_{acc}$) des Schienenfahrzeugs (10) die Berechnung einer Schätzwinkelkorrektur ($\xi_{\Delta v}$) aufweist, die von dem Unterschied zwischen der geschätzten Bewegungsgeschwindigkeit des Schienenfahrzeugs (10) und dem Integral der bei einer vorhergehenden Iteration des Verfahrens berechneten Schätzung der Eigenbeschleunigung des Schienenfahrzeugs (10) abhängt.

**5.** Verfahren gemäß einem der vorhergehenden Ansprüche, dadurch charakterisiert, dass der Zustandsvektor ($x_t$) die Komponenten aufweist entsprechend:

- drei Eigenbeschleunigungen (p, q, r) des Schienenfahrzeugs (10) gemäß drei Achsen eines festen Koordinatensystems (R);
- die Eulerwinkel ($\phi$, $\theta$, $\psi$) die das Verhalten und die Orientierung des Zugs repräsentieren;
- die Winkelgeschwindigkeiten ($\dot{\phi}, \dot{\theta}, \dot{\psi}$), die die Ableitungen der Eulerwinkel sind;
- systematischen Messabweichungen ($\beta_{gx}$, $\beta_{gy}$) des Gyrometers (22) gemäß mindestens zwei Achsen; und
- eine Bogengeschwindigkeit (v) des Schienenfahrzeugs (10).

**6.** Verfahren gemäß einem der vorhergehenden Ansprüche, dadurch charakterisiert, dass bei jeder folgenden Iteration des Verfahrens, die Anwendung des Zustandsschätzers die Berechnung einer folgenden Schätzung ($\hat{x}_{t|t}$) eines folgenden Zustandsvektors ($x_t$) ausgehend von einem folgenden Vektor von Messungen ($y_t$) und einer bei einer vorhergehenden Iteration des Verfahrens ermittelten vorhergehenden Schätzung ($\hat{x}_{t-1|t-1}$) eines vorhergehenden Zustandsvektors ($x_{t-1}$) aufweist.

**7.** Verfahren gemäß einem der vorhergehenden Ansprüche, dadurch charakterisiert, dass es außerdem einen Schritt (170) der Selbstkalibrierung aufweist, der durchgeführt wird, wenn das Schienenfahrzeug (10) stillsteht.

**8.** Verfahren gemäß Anspruch 7, dadurch charakterisiert, dass der Schritt der Selbstkalibrierung (170) die Korrektur der Schätzungen der systematischen Messabweichungen ($\beta_{gx}$, $\beta_{gy}$) des Gyrometers (22) und die Korrektur der Schätzungen des Roll-Verhaltens ($\phi_{acc}$) und des Nick-Verhaltens ($\theta_{acc}$) aufweist.

**9.** Verfahren gemäß einem der vorhergehenden Ansprüche, dadurch charakterisiert, dass der Zustandsschätzer ein Kalmanfilter ist.

**10.** Computerprogrammprodukt aufweisend Computerinstruktionen, die, wenn sie von einer Computervorrichtung ausgeführt werden, ein Verfahren gemäß einem der vorhergehenden Ansprüche durchführen.

**11.** System (20) zum Berechnen der Eigenbeschleunigung eines Schienenfahrzeugs (10) bei seiner Bewegung entlang einer Schiene (12), wobei das Schienenfahrzeug (10) eine träge Zentrale zur Beschaffung von Daten (16) aufweist, aufweisend einen Beschleunigungsmesser (21), der es ermöglicht, erste Messungen, die den tatsächlichen Beschleunigungen des Schienenfahrzeugs (10) gemäß drei orthogonalen Achsen (X, Y, Z) entsprechen, zu liefern und ein Gyrometer (22), das es ermöglicht, zweite Messungen, die den Winkelgeschwindigkeiten des Schienenfahrzeugs (10) gemäß drei orthogonalen Achsen (X, Y, Z) entsprechen, zu liefern;
wobei das System dadurch charakterisiert ist, dass es geeignet ist zum:

- Schätzen (120) der Bewegungsgeschwindigkeit des Schienenfahrzeugs (10) unter Verwendung einer Spektralanalyse der ersten Messungen;
- Schätzen (130) des Roll-Verhaltens ($\phi_{acc}$) und des Nick-Verhaltens ($\theta_{acc}$) des Schienenfahrzeugs (10) ausgehend von den ersten Messungen;
- Definieren (140) eines Vektors von Messungen ($y_t$), zusammengesetzt aus den ersten Messungen, den zweiten Messungen, der geschätzten Bewegungsgeschwindigkeit des Schienenfahrzeugs und des geschätzten Roll-Verhaltens ($\phi_{acc}$) und des geschätzten Nick-Verhaltens ($\theta_{acc}$) des Schienenfahrzeugs (10);
- Definieren (140) eines Zustandsvektors ($x_t$), der mindestens eine Komponente (p, q, r) aufweist, die der Eigengeschwindigkeit des Eisenfahrzeugs gemäß mindestens einer Achse (X, Y, Z) entspricht;
- Anwenden (150) eines Zustandsschätzers zum Schätzen des Zustandsvektors ($x_t$) unter Verwendung des Vektors von Messungen ($y_t$);
- Extrahieren (160) der Eigenbeschleunigung des Schienenfahrzeugs (10) aus diesem Zustandsvektor.

## Claims

1. Method for calculating the proper acceleration of a railway vehicle (10) during the displacement of the latter along a railway track (12), the railway vehicle (10) comprising an inertial platform for acquiring data (16) comprising an accelerometer (21) making it possible to provide first measurements corresponding to the real accelerations of the railway vehicle (10) in relation to three orthogonal axes (X, Y, Z), and a gyrometer (22) making it possible to provide second measurements corresponding to the angular velocities of the railway vehicle (10) in relation to three orthogonal axes (X, Y, Z) ;
   the method being **characterized in that** it comprises the following steps:

   - estimating (120) the speed of displacement of the railway vehicle (10) by using a spectral analysis of the first measurements;
   - estimating (130) the roll attitude ($\varphi_{acc}$) and pitch attitude ($\theta_{acc}$) of the railway vehicle (10) on the basis of the first measurements;
   - defining (140) a vector of measurements ($yt$) composed of the first measurements, of the second measurements, of the estimated speed of displacement of the railway vehicle and of the estimated roll attitude ($\varphi_{acc}$) and estimated pitch attitude ($\theta_{acc}$) of the railway vehicle (10);
   - defining (140) a state vector ($x_t$) comprising at least one component ($p, q, r$) corresponding to the proper acceleration of the railway vehicle in relation to at least one axis (X, Y, Z);
   - applying (150) a state estimator to estimate the state vector ($x_t$) by using the vector of measurements ($y_t$) ;
   - extracting (160) the proper acceleration of the railway vehicle (10) from this state vector.

2. Method according to Claim 1, **characterized in that** the estimation of the speed of displacement of the railway vehicle (10) is performed by using a spectral analysis of the first measurements corresponding to the real accelerations of the railway vehicle (10) in relation to a vertical axis (Z).

3. Method according to Claim 2, **characterized in that** the estimation of the speed of displacement of the railway vehicle (10) comprises the calculation of a fast Fourier transformation of the said first measurements.

4. Method according to any one of the preceding claims, **characterized in that** during each following iteration of the method, the estimation of the roll attitude ($\varphi_{acc}$) and pitch attitude ($\theta_{acc}$) of the railway vehicle (10) comprises the calculation of a correction of estimation angle ($\xi_{\Delta v}$) dependent on the difference between the estimated speed of displacement of the railway vehicle (10) and the integration of the estimation of the proper acceleration of the railway vehicle (10) calculated during a preceding iteration of the method.

5. Method according to any one of the preceding claims, **characterized in that** the state vector ($x_t$) comprises the components corresponding to:

   - three proper accelerations ($p, q, r$) of the railway vehicle (10) in relation to three orthogonal axes in a fixed reference frame (R);
   - the Euler angles ($\varphi, \theta, \psi$) representing the attitude and the orientation of the train;
   - the angular velocities ($\varphi', \theta', \psi'$) being the derivatives of the Euler angles;
   - biases ($\beta_{gx}, \beta_{gy}$) of the gyrometer (22) in relation to at least two axes; and
   - a curvilinear velocity ($v$) of the railway vehicle (10) .

6. Method according to any one of the preceding claims, **characterized in that** during each following iteration of the method, the application of the state estimator comprises the calculation of a following estimation ($x^\wedge_{t/t}$) of a following state vector ($x_t$) on the basis of a following vector of measurements ($y_t$) and of a preceding estimation ($x^\wedge_{t-1/t-1}$), determined during a preceding iteration of the method, of a preceding state vector ($x_{t-1}$).

7. Method according to any one of the preceding claims, **characterized in that** it furthermore comprises a step (170) of auto-calibration performed when the railway vehicle (10) is stationary.

8. Method according to Claim 7, **characterized in that** the auto-calibration step (170) comprises the correction of the estimations on biases ($\beta_{gx}, \beta_{gy}$) of the gyrometer (22) and the correction on the estimations of the roll attitude ($\varphi_{acc}$) and pitch attitude ($\theta_{acc}$).

9. Method according to any one of the preceding claims, **characterized in** this the state estimator is a Kalman filter.

10. Computer program product comprising software instructions which, when implemented by a computing facility, implement a method according to any one of the preceding claims.

**11.** System (20) for calculating the proper acceleration of a railway vehicle (10) during the displacement of the latter along a railway track (12), the railway vehicle (10) comprising an inertial platform for acquiring data (16) comprising an accelerometer (21) making it possible to provide first measurements corresponding to the real accelerations of the railway vehicle (10) in relation to three orthogonal axes (X, Y, Z), and a gyrometer (22) making it possible to provide second measurements corresponding to the angular velocities of the railway vehicle (10) in relation to three orthogonal axes (X, Y, Z); the system being **characterized in that** it is suitable for:

- estimating (120) the speed of displacement of the railway vehicle (10) by using a spectral analysis of the first measurements;
- estimating (130) the roll attitude ($\varphi_{acc}$) and pitch attitude ($\theta_{acc}$) of the railway vehicle (10) on the basis of the first measurements;
- defining (140) a vector of measurements ($y_t$) composed of the first measurements, of the second measurements, of the estimated speed of displacement of the railway vehicle and of the estimated roll attitude ($\varphi_{acc}$) and estimated pitch attitude ($\theta_{acc}$) of the railway vehicle (10);
- defining (140) a state vector ($x_t$) comprising at least one component ($p, q, r$) corresponding to the proper acceleration of the railway vehicle in relation to at least one axis (X, Y, Z);
- applying (150) a state estimator to estimate the state vector ($x_t$) by using the vector of measurements ($y_t$);
- extracting (160) the proper acceleration of the railway vehicle (10) from this state vector.

FIG.1

FIG.2

FIG.3

## RÉFÉRENCES CITÉES DANS LA DESCRIPTION

**Documents brevets cités dans la description**

- US 2009326851 A1
- DE 102012219109 A1